# FASCICULE DE BREVET EUROPEEN

(11) **EP 0 786 320 B1**
(45) Date de publication et mention de la délivrance du brevet: **08.01.2003**
(21) Numéro de dépôt: 97450001.9
(22) Date de dépôt: 27.01.1997
(51) Int. Cl.: B29C 35/08, B29C 70/34, B29C 70/44

(54) **Procédé de réalisation de pièces en matériau composite à haute précision dimensionnelle mettant en oeuvre une polymérization par ionisation**
Verfahren zur Herstellung von Verbundgegenständen mit hoher Massgenauigkeit durch Aushärtung mit ionisierenden Strahlen
Process for the manufacture of composite articles having high dimensional accuracy by curing with ionizing rays

(30) Priorité: 29.01.1996 FR 9601315
(43) Date de publication de la demande: 30.07.1997
(73) Titulaire: EADS FRANCE, 75016 Paris (FR)
(72) Inventeur: Lacour, Dominique, 33370 Tresses (FR); His, Sylvie, 33520 Bruges (FR); Raut, François, 33 rue Poujeau, 33200 Bordeaux (FR); Desagulier, Christian, 78700 Conflans-Ste-Honorine (FR); Chieusse, Nathalie, 78410 Aubergenville (FR)
(74) Mandataire: Thébault, Jean-Louis

(56) Documents cités:
- EP-A- 0 036 391
- EP-A- 0 165 118
- EP-A- 0 312 167
- EP-A- 0 514 351
- EP-A- 0 558 366
- US-A- 3 930 098
- PATENT ABSTRACTS OF JAPAN vol. 007, no. 119 (E-177), 24 Mai 1983 & JP 58 038096 A (PIONEER KK), 5 Mars 1983,

## Description

La présente invention a trait à la réalisation de pièces en matériau composite notamment de grandes dimensions, nécessitant une haute précision dimensionnelle.

Plus précisément, l'invention vise la réalisation de pièces formées d'un panneau support de type alvéolaire flanqué de part et/ou d'autre d'une peau de carbone rapportée par collage, le but de l'invention étant l'obtention de pièces pouvant être de grandes dimensions, présentant une grande précision dimensionnelle et une forte raideur pour un faible poids et un coût d'obtention modéré.

Le domaine d'application de l'invention concerne bien entendu les engins ou structures destinées à être placés en orbite autour de la terre ou lancés dans l'espace mais également l'aéronautique en général, ainsi que les applications maritimes (pièces ou structures de bateaux telles que des coques par exemple) ou terrestres (panneau ou cloison de véhicules tels que trains ou voitures par exemple).

Les pièces à structure du type ci-dessus, à savoir un panneau flanqué de part et/ou d'autre d'une peau formée d'une ou plusieurs nappes de fibres pré-imprégnées d'une résine thermo-durcissable, chaque peau étant fixée au panneau support à l'aide d'une résine adhésive, sont généralement confectionnées en deux étapes : stratification de la ou des peaux et durcissement de l'adhésif d'assemblage. Ces deux étapes font intervenir chacune un processus de polymérisation, les deux phases de polymérisation étant opérées, soit consécutivement par une technique de cuisson classique, soit simultanément, la polymérisation de la résine de pré-imprégnation des fibres et de la résine adhésive étant réalisée par co-cuisson.

Dans ce dernier cas, le panneau support et la ou les peaux sont mises en place dans un moule de forme appropriée et l'ensemble est placé en autoclave pour y subir une polymérisation des résines sous fortes pressions et hautes températures.

La réalisation de grandes pièces par cette technique pose des problèmes.

En premier lieu, la taille habituelle des autoclaves limite celle des moules pouvant y être introduits et donc celle des pièces réalisables, sauf à construire bien entendu des autoclaves spéciaux, ce qui n'est pas économique.

En second lieu, les températures mises en oeuvre dans une telle polymérisation thermique, de l'ordre de 160 à 180°C, entraînent des risques de contraintes internes, de micro-fissuration et de délaminage, ainsi que des risques, accrus par la taille des pièces, de déformation par dilatation, ces risques contraignant à recourir à des moules en matériau à très faible dilatation thermique tel que de l'Invar ou du graphite, qui sont coûteux.

En outre, du fait des masses en présence et de l'hétérogénéité de la pièce, il se pose le problème de la progression du flux thermique au sein de l'ensemble à polymériser, qui rend très difficile la maîtrise de l'isotropie thermique du processus de polymérisation. Enfin, ces contraintes thermiques conduisent à opérer des montées en température lentes, ce qui grève évidemment le coût de l'opération.

La co-cuisson thermique conduit donc, outre son coût élevé, à des performances plus faibles, notamment en ce qui concerne la précision de la forme caractérisée par le paramètre dénommé habituellement RMS (Root Mean Square).

Au lieu d'une co-cuisson thermique, ou polymérisation "chaude", on pourrait penser à effectuer une co-polymérisation par ionisation qui est bien connue dans son principe et qui est dite polymérisation "froide" du fait des élévations de température induites limitées aux alentours de 80°C.

On connaît les avantages d'une telle polymérisation quant à sa rapidité de mise en oeuvre, son efficacité et les faibles contraintes thermiques imposées aux matériaux. Elle s'applique tout naturellement à des pièces ou objets pouvant avoir de grandes dimensions et n'entraîne pas de variations dimensionnelles des parties irradiées. Toutefois, les applications connues de cette technique, par exemple par le brevet européen N° 0.165.118 délivré au nom du Demandeur, visent essentiellement la simple irradiation de pièces complètes en matériau composite déjà réalisées, en vue du durcissement des résines entrant dans la composition desdites pièces. Cette irradiation n'est pas mise en oeuvre au cours du processus de confection de la pièce, à ses formes et dimensions désirées, mais postérieurement et dans des conditions de température et de pression dites normales ou ambiantes.

Par ailleurs, la polymérisation par ionisation pose certains problèmes au niveau du comportement des résines.

En effet, dès le début d'une telle polymérisation, la résine se rigidifie et ne passe pas par l'état de fluidité pratiquement liquide qu'elle atteint dans la polymérisation traditionnelle thermique, ce qui nuit à une bonne diffusion de la résine notamment dans les espaces interstitiels des fibres.

Par EP 0036391, on connaît un procédé de fabrication d'objets en matière plastique renforcée de fibres, combinant un compactage et une polymérisation par rayonnement électronique. Toutefois, un tel procédé ne s'applique qu'à la réalisation d'objets constitués de nappes de fibres et non de structures formées de panneaux constitués par l'assemblage d'une structure alvéolaire et d'une peau sur l'une et/ou l'autre face de ladite structure alvéolaire.

La présente invention a pour objet un procédé de réalisation de pièces en matériau composite à haute précision dimensionnelle, formées d'un panneau support alvéolaire flanqué de part et/ou d'autre d'une peau fixée par une résine adhésive et comprenant au moins une nappe de fibres minérales ou organiques et une matrice organique de liaison, consistant:
- à placer par drapage sur un moule de forme et dimensions appropriées à la pièce à réaliser, au moins une nappe de fibres pré-imprégnées d'une résine polymérisable par ionisation, pour réaliser la ou une première peau ;
- à recouvrir ladite première peau d'un film de résine adhésive polymérisable par ionisation,
- à recouvrir ledit film d'un panneau alvéolaire en une ou plusieurs parties accolées, d'épaisseur appropriée,
- à compacter l'ensemble première peau film-panneau,
- éventuellement à former puis compacter une seconde peau comprenant au moins une nappe de fibres pré-imprégnées, d'une résine polymérisable par ionisation, un film de résine adhésive polymérisable par ionisation étant interposé entre ladite peau et ledit panneau,
- et, enfin, au cours du compactage dudit ensemble première peau-film-panneau alvéolaire ou dudit ensemble première peau-film-panneau alvéolaire-film-seconde peau, à effectuer une polymérisation par ionisation.

Un tel procédé permet de réaliser des structures du type panneau, cloison, coque, planes ou non, caisson, etc... pouvant être de grandes dimensions et remarquables par leur tenue mécanique, leur rigidité, leur précision dimensionnelle, leur légèreté et leur coût de revient relativement économique résultant notamment de la réduction des temps de fabrication et de la possibilité d'utiliser des moules de grandes dimensions en matériau meilleur marché que l'Invar ou le graphite tel que l'acier doux ou un alliage d'aluminium par exemple, du fait des faibles élévations de température constatées lors de la polymérisation.

En particulier, la mise en oeuvre conjointe d'une polymérisation par ionisation et d'un compactage permet d'obtenir une très bonne homogénéité de la matrice de liaison des fibres des peaux avec un faible taux de porosité et une très bonne qualité adhésive entre panneau support alvéolaire et peaux, le procédé étant tout spécialement approprié à la réalisation de structures complexes impliquant à la fois la formation de matrices de liaison de fibres et la fixation par collage de parties de la structure de nature différente.

Suivant des modes de mise en oeuvre du procédé de l'invention, les fibres pourront être par exemple des fibres de carbone haut module ou des fibres de verre, de silice, de carbure de silicium ou des fibres aramides telles que le Kevlar et chaque nappe pourra être formée par le placement côte à côte de lés de fibres unidirectionnelles pré-imprégnées. Chaque peau pourra être constituée de plusieurs nappes superposées, avec une disposition alternée à 90° des fibres d'une nappe par rapport aux fibres d'une nappe adjacente. Si l'on veut un renforcement de la qualité de surface ou de la tenue mécanique de la peau mise en place contre le moule, on pourra compacter soit la première nappe de cette peau, soit l'ensemble des nappes de la peau. Le compactage sera avantageusement, notamment dans le cas de grandes pièces, réalisé sous vide . La résine d'imprégnation des fibres et la résine adhésive pourront être la même et choisies par exemple dans le groupe des résines acryliques ou à base de polysilane, polymérisables par ionisation.

Le panneau support de peau pourra être constitué d'une structure alvéolaire du type nid d'abeille, par exemple en aluminium.

D'autres caractéristiques et avantages ressortiront de la description qui va suivre d'un mode de mise en oeuvre dudit procédé, description donnée à titre d'exemple uniquement et en regard des dessins annexés sur lesquels :
- Figure 1 est une vue schématique en coupe d'une structure du type sandwich selon l'invention en place dans un moule placé sous vessie,
- Figure 2 est une vue en coupe partielle d'une structure selon l'invention, à hauteur de liaisons entre l'âme centrale et l'une des peaux,

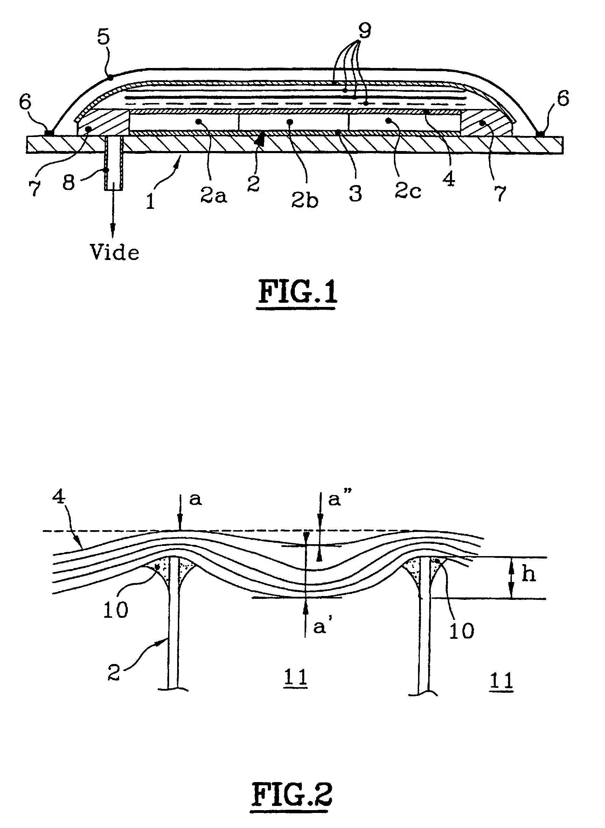

Sur la figure 1, on a représenté schématiquement en coupe un moule dans lequel a été mise en place une structure sandwich formée d'une âme centrale flanquée de part et d'autre d'une peau, ladite structure étant recouverte d'une vessie de mise sous vide.

Plus précisément, le moule comprend une plaque 1 dont la face supérieure, destinée à recevoir ladite structure sandwich, est dimensionnée et configurée en fonction de la pièce à réaliser.

D'une manière générale, cette pièce sera du type panneau, coque, cloison, caisson ou analogue, à âme centrale 2 d'épaisseur régulière ou non formée par exemple d'une structure alvéolaire du genre nid d'abeille, d'épaisseur appropriée, flanquée de part et d'autre d'une peau 3,4 en matériau composite.

L'âme centrale 2 est par exemple un nid d'abeille d'aluminium, d'épaisseur 25 mm et dont l'axe des cellules est perpendiculaire au plan des peaux 3, 4.

Les peaux 3, 4 sont constituées chacune de plusieurs nappes superposées de fibres unidirectionnelles pré-imprégnées. Dans le mode de réalisation décrit et représenté, la plaque-moule 1 est plane, mais pourrait être incurvée, concave ou convexe et selon toute courbure, en fonction de la morphologie de la pièce à réaliser. Ladite surface supérieure du moule 1 pourrait être également à facettes, planes ou incurvées.

Sur cette face supérieure du moule est placé par drapage, après préparation du moule suivant les techniques habituelles, une première nappe de fibres par exemple de carbone haut module, pré-imprégnées d'une résine acrylique polymérisable par ionisation. Les fibres dénommées M55J commercialisées par la Société TORAY conviennent particulièrement.

Le drapage est réalisée par exemple par la dépose côte à côte de lés de quelques centimètres de largeur, les fibres étant orientées longitudinalement aux lés. De préférence, plusieurs nappes identiques seront superposées pour former la première peau 3, les lés étant de préférence croisés à angle droit d'une nappe à la suivante.

Si l'on souhaite conférer à la face visible de la peau de la pièce un état de surface de grande qualité, on pourra soumettre la première nappe de la peau 3, après dépose, à un compactage par exemple sous vide, suivant la technique habituelle. A cet effet, après avoir recouvert ladite nappe des couches protectrices conventionnelles et mis en place une vessie, telle que la vessie 5 de la figure 1, fixée à la plaque 1 et étanchée sur sa périphérie par du mastic 6, ainsi que des règles de bordures analogues aux règles 7 de la figure 1, on fait le vide dans l'espace entre nappe (3) et vessie 5 par l'intermédiaire d'un conduit 8 relié à une source de vide appropriée (non représentée). Un vide correspondant à une pression absolue inférieure ou égale à 0,2 MPa environ est appliqué pendant une douzaine d'heures, à température ambiante.

Les nappes successives de la peau 3 sont ensuite mises en place par drapage sans être compactées. Cependant, une fois le nombre total de nappes drapées, si l'on souhaite renforcer les qualités mécaniques de la peau ainsi réalisée, on soumettra cette dernière à un compactage sous vide dans les même conditions que pour la première nappe.

Ensuite, la résine adhésive, avantageusement de même nature que la résine d'imprégnation des fibres des peaux 3, 4, est déposée sur la première peau 3 sous la forme d'une nappe formée de bandes accolées.

Puis, la structure nid d'abeille formée d'un panneau d'un seul tenant ou, comme représenté sur la figure 1, de plusieurs parties 2a, 2b, 2c accolées, est posée sur le film adhésif (non représenté) ainsi réalisé.

L'ensemble nid d'abeille-film-première peau est alors soumis à un compactage sous vide dans les mêmes conditions qu'indiquées plus haut.

Un tel compactage a notamment pour but de forcer à la fois la résine d'imprégnation des fibres des nappes et la résine adhésive à fluer dans les espaces interstitiels des fibres en particulier afin de tenir compte des effets de la polymérisation par ionisation comme on le verra plus loin.

Ensuite, il convient d'interposer un film adhésif entre le nid d'abeille 2 et la peau supérieure 4. A cet effet, comme la face supérieure du nid d'abeille n'offre pas les conditions de support appropriées pour le film adhésif, ce dernier est mis en place sur la face de la première nappe de la peau 4 destinée à être placée contre le nid d'abeille.

Les caractéristiques de ce second film adhésif sont similaires à celles du premier film.

Plus précisément, chaque lé de ladite première nappe sera revêtu d'une bande de film, puis drapé sur le nid d'abeille en sorte de constituer ladite première nappe.

Les nappes de la peau 4 sont identiques à celles de la peau 3 et mises en place suivant le même processus de drapage, excepté que la première nappe n'est pas soumise à compactage. Il est à noter que de préférence l'agencement des peaux se fera suivant une structure dite miroir, les nappes de même rang à partir de l'âme centrale des peaux 3 et 4 étant drapées de la même manière.

Une fois la peau 4 réalisée, on met en place, comme illustré par la figure 1, les règles de bordure 7, les couches ou films protecteurs habituels 9 (tissu d'arrachage, barrière à résine, répartiteur de pression, drainage des gaz) et enfin la vessie 5.

Le sandwich 2, 3, 4 est alors soumis à un compactage sous un vide correspondant à une pression absolue inférieure ou égale à 0,4 MPa environ, pendant une durée de quelques heures, cinq par exemple, avant de soumettre l'ensemble, toujours sous vide, à une polymérisation par ionisation à l'aide par exemple d'un rayonnement X ou d'un bombardement électronique.

A cet effet, l'ensemble du sandwich 2, 3, 4 est soumis à un, ou de préférence plusieurs passages, devant par exemple un accélérateur d'électrons de 10MeV d'une puissance de 20 Kw, avec utilisation d'un cible de conversion lors de l'utilisation des rayons X, comme décrit dans le document FR-A-2 564 029.

Les conditions d'irradiation ou bombardement, nombre de passages, vitesse de défilement devant le canon de l'accélérateur, doses à chaque passage, sont déterminées de façon à ce que toute la résine des fibres et des films adhésifs, reçoive une dose d'irradiation ou de bombardement appropriée, par exemple 100 KGy. De préférence, cette dose sera appliquée en réalisant plusieurs passages à dose minimale, séparés par des intervalles de temps afin de limiter les échauffements au sein du matériau composite et du moule métallique 1. D'une manière générale et à titre indicatif, les doses d'irradiation ou de bombardement peuvent s'étaler de 5 à 300 KGy. Le pilotage de l'irradiation ou du bombardement dépend de divers facteurs tels que la nature de la résine, la morphologie et les dimensions de la pièce à réaliser.

Pendant toute la durée de la polymérisation, qui ne prend que quelques minutes, le vide est maintenu dans le moule 1.

Lorsque l'irradiation ou le bombardement est terminé et que la température du matériau composite est revenue à la valeur ambiante, c'est à dire 25°C environ, on coupe le vide et ouvre le moule pour retirer la pièce finie.

Le compactage, non seulement au cours de l'irradiation ou bombardement, mais en préparation à cette opération, de même que le compactage de l'ensemble première peau-film adhésif-nid d'abeille, est nécessaire pour compenser les effets particuliers sur les résines de la polymérisation par ionisation.

En effet, dès le début d'un tel processus de polymérisation, la résine se rigidifie et ne passe pas l'état de fluidité pratiquement liquide qu'elle atteint dans la polymérisation traditionnelle thermique. C'est pourquoi, conformément à l'invention, on procède auxdits compactages dans les conditions indiquées.

D'une manière générale, les divers compactages s'effectuent avec le vide le plus poussé possible, compatible avec la nature des matériaux en présence.

Il est à noter cependant que le vide mis en oeuvre lors du compactage final est moins poussé que celui des compactages précédents, pour limiter le phénomène d'enfoncement dénommé "telegraphing" de la peau supérieure 4 à l'intérieur des alvéoles du nid d'abeille 2.

La mise en oeuvre conjointe d'une polymérisation par ionisation et d'un compactage permet ainsi d'obtenir une très bonne homogénéité de la matrice de liaison des fibres des peaux avec un faible taux de porosité et une très bonne qualité de la liaison adhésive entre nid d'abeille et peaux.

Un examen sous microscope des liaisons entre nid d'abeille 2 et peau 3, 4 d'une telle pièce montre, comme illustré par la coupe micrographique de la figure 2, un bon pontage 10 d'adhésif au droit du pied de cellule du nid d'abeille 2, entre ce dernier et la première nappe de la peau (4), ledit pontage ayant pour conséquence une hauteur h optimale des ménisques, ce qui assure un meilleur transfert des efforts entre peau et nid d'abeille, un bon compactage a de la peau **4** au droit des pieds de cellules, un bon foisonnement a' des fibres des nappes de la peau 4 dans l'axe des cellules 11 et un "telegraphing" a" réduit (amplitude du déport de la peau **4** dans l'axe des cellules consécutif à la mise sous vide). Ces paramètres sont indicateurs d'une liaison particulièrement efficace entre nid d'abeille et peaux.

Le procédé est par ailleurs intéressant au plan économique car il permet l'emploi comme matériau du moule 1 d'un métal ou alliage, tel que de l'acier doux ou un alliage d'aluminium, beaucoup moins coûteux que l'Invar ou le graphite. Les faibles élévations de température observées pendant la polymérisation par ionisation autorise en effet l'emploi de matériau présentant un coefficient de dilatation non négligeable, sans conséquence quant à la précision dimensionnelle de la pièce finale obtenue.

On peut ainsi envisager la réalisation de très grandes pièces dans des conditions économiquement et industriellement acceptables.

Selon la morphologie et les dimensions de la pièce, cette dernière sera présentée devant le canon de l'accélérateur suivant un processus approprié en étant portée par une structure adaptée de façon à être mue dans l'espace en sorte d'effectuer l'irradiation ou le bombardement dans les conditions désirées.

Le mode de mise en oeuvre décrit ci-dessus concerne la réalisation d'une structure sandwich, c'est à dire comprenant une âme centrale flanquée sur chaque face d'une peau.

Le procédé permet bien entendu la fabrication de structures réduites à une seule peau rapportée sur une face d'un panneau support.

Le processus de fabrication est similaire à celui décrit plus haut, excepté que le second film adhésif et la seconde peau 4 ne sont pas mis en place sur le panneau support alvéolaire 2 et que le compactage de l'ensemble peau 3-film adhésif-panneau alvéolaire 2 est mis en oeuvre, seul, durant cinq heures par exemple, puis suivi, tout en étant maintenu, à ladite polymérisation par ionisation décrite plus haut à propos de l'ensemble 2-3-4. Ce compactage peut s'opérer avec un vide poussé tel qu'un vide sous une pression absolue inférieure ou égale à 0,2 MPa, puisqu'il n'y a alors aucun risque de "telegraphing", la vessie de mise sous vide étant pressée directement sur le panneau 2.

Enfin, l'invention n'est évidemment pas limitée aux modes de mise en oeuvre décrits ci-dessus, mais en couvre au contraire toutes les variantes comprises dans le cadre défini par les revendications.

C'est ainsi que les fibres des peaux peuvent être choisies dans le groupe comprenant les fibres de carbone, de verre, de silice, de carbure de silicium, et les fibres aramides telles que le Kevlar. Les fibres sont des fibres longues unidirectionnelles ou mixtes, par exemple des hybrides carbone silice, ou encore des mèches ou des fibres relativement courtes à distribution aléatoire.

Les nappes de fibres peuvent être également des tissus ou des mats et les angles de drapage, d'une nappe à l'autre, peuvent être quelconque et variables.

Le panneau support sur lequel est rapportée une peau sur une face ou sur les deux est d'une manière générale un panneau alvéolaire en un matériau léger et de bonne tenue à la compression. Il peut être par exemple un nid d'abeille.

Les résines utilisables pour l'imprégnation des fibres et la liaison entre peaux et panneau support peuvent être toute résine polymérisable par ionisation, notamment certaines résines acryliques ou à base de polysilane. Des résines appropriées sont mentionnées par exemple dans les documents FR-2.693.465 et 2.698.636.

Le moule 1 peut être réalisé en un matériau non métallique, tel que par exemple du béton de résine, du bois ou du plâtre.

Les valeurs des vides de compactage ainsi que les durées de compactage peuvent bien entendu varier en fonction de la nature des pièces à réaliser et de leurs constituants.

Il est à noter enfin que les compactages peuvent être réalisés par application d'une pression et non plus d'un vide.

## Revendications

1. Procédé de réalisation de pièces en matériau composite à haute précision dimensionnelle, formées d'un panneau support alvéolaire (2), flanqué de part et/ou d'autre d'une peau (3, 4) fixée par une résine adhésive et comprenant au moins une nappe de fibres minérales ou organiques et une matrice organique de liaison, consistant:
- à placer par drapage sur un moule (1) de forme et dimensions appropriées à la pièce à réaliser, au moins une nappe de fibres pré-imprégnées d'une résine polymérisable par ionisation, pour réaliser la ou une première peau (3) ;
- à recouvrir ladite première peau d'un film de résine adhésive polymérisable par ionisation,
- à recouvrir ledit film d'un panneau alvéolaire (2) en une ou plusieurs parties accolées, d'épaisseur appropriée,
- à compacter l'ensemble première peau (3) -film-panneau alvéolaire (2),
- éventuellement à former puis compacter une seconde peau (4) comprenant au moins une nappe de fibres pré-imprégnées d'une résine polymérisable par ionisation, un film de résine adhésive polymérisable par ionisation étant interposé entre ladite peau (4) et ledit panneau (2),
- et, enfin, au cours du compactage dudit ensemble première peau (3)-film-panneau alvéolaire (2) ou dudit ensemble première peau (3)-film-panneau alvéolaire (2)-film-seconde peau (4), à effectuer une polymérisation par ionisation.

2. Procédé suivant la revendication 1, **caractérisé en ce que** les fibres pré-imprégnées sont choisies dans le groupe des fibres de carbone à haut module, de verre, de silice, de carbure de silicium et des fibres aramides.

3. Procédé suivant la revendication 1 ou 2, **caractérisé en ce que** les fibres pré-imprégnées sont des fibres longues ou courtes, de même nature ou mixtes, ou des mèches, et sous forme de nappe de fibres unidirectionnelles ou de tissu ou de mat.

4. Procédé suivant l'une des revendications 1 à 3, **caractérisé en ce que** chaque peau (3, 4) est constituée de plusieurs nappes superposées et chaque nappe comporte des fibres de même orientation, les fibres de deux nappes consécutives étant croisées à angle droit ou suivant tout autre angle.

5. Procédé suivant l'une des revendications 1 à 4, **caractérisé en ce que** la résine d'imprégnation et la résine adhésive sont choisies dans le groupe des résines acryliques ou à base de polysilane, polymérisables par ionisation.

6. Procédé suivant l'une des revendications 1 à 5, **caractérisé en ce que** le panneau support alvéolaire (2) est du type nid d'abeille.

7. Procédé suivant la revendication 6, **caractérisé en ce que** le panneau support alvéolaire (2) est un nid d'abeille d'aluminium d'une seule pièce ou en plusieurs parties accolées (2a, 2b, 2c).

8. Procédé suivant l'une des revendications 1 à 7, **caractérisé en ce que** le panneau support alvéolaire (2) est en partie ou en totalité plan ou incurvé suivant toute géométrie.

9. Procédé suivant l'une des revendications 1 à 8, **caractérisé en ce que** le moule (1) est réalisé dans un matériau choisi dans le groupe comprenant l'acier doux, les alliages d'aluminium, le plâtre, le bois, les bétons de résine.

10. Procédé suivant l'une des revendications 1 à 9, **caractérisé en ce que** la peau (3) ou première nappe de peau en contact avec la paroi du moule (1) est soumise à un compactage.

11. Procédé suivant l'une des revendications 1 à 10, **caractérisé en ce qu'**après mise en place de toutes les nappes de la peau (3) en contact avec le moule (1), ladite peau est soumise à un compactage.

12. Procédé suivant l'une des revendications 1 à 11, **caractérisé en ce que** ledit second film adhésif est mis au préalable en place contre la face de la première nappe de la seconde peau (4) destinée à être appliquée contre le panneau support (2).

13. Procédé suivant l'une des revendications 1 à 12, **caractérisé en ce que** le compactage est réalisé par application d'un vide.

14. Procédé suivant l'une des revendications 1 à 12 et la revendication 13, **caractérisé en ce que** le compactage de la première peau (3) et le compactage de l'ensemble première peau (3) - premier film adhésif - panneau support alvéolaire (2) sont effectués sous un vide correspondant à une pression absolue inférieure ou égale à 0,2 MPa environ et pendant une durée de douze heures environ.

15. Procédé suivant l'une des revendications 1 à 12 et la revendication 13, plus particulièrement appliqué à la réalisation de pièces à âme centrale alvéolaire (2) munie d'une peau (3, 4) sur ses deux faces, **caractérisé en ce que** le compactage au cours duquel s'effectue la polymérisation par ionisation est opéré sous un vide correspondant à une pression absolue inférieure ou égale à 0,4 MPa environ, la durée de compactage avant l'opération de polymérisation étant de cinq heures environ.

16. Procédé suivant l'une des revendications 1 à 15, **caractérisé en ce que** la dose d'irradiation ou de bombardement lors de la polymérisation par ionisation est appliquée par passages successifs à dose réduite.

## Patentansprüche

1. Verfahren für die Herstellung von Teilen aus Verbundmaterial mit hoher Abmessungsgenauigkeit, die aus einer wabenförmigen Trägerplatte (2) gebildet sind, die auf einer und/oder auf der anderen Seite von einer Haut (3, 4) flankiert ist, die durch ein Klebeharz befestigt ist und wenigstens eine Lage aus mineralischen oder organischen Fasern und eine organische Verbindungsgrundmasse umfaßt, wobei das Verfahren umfaßt:
- Anordnen wenigstens einer vorimprägnierten Faserlage aus einem durch Ionisation polymerisierbaren Harz durch Aufschrumpfen auf eine Form (1) mit für das herzustellende Teil geeigneter Formgebung und geeigneten Abmessungen, um die oder eine erste Haut (3) herzustellen,
- Abdecken der ersten Haut mit einem durch Ionisation polymerisierbaren Klebeharzfilm,
- Abdecken des Films mit einer wabenförmigen Platte (2) aus einem oder mehreren aneinandergefügten Teilen und mit geeigneter Dicke,
- Verdichten der Gesamtheit aus der ersten Haut (3), dem Film und der wabenförmigen Platte,
- eventuell Bilden und dann Verdichten einer zweiten Haut (4), die wenigstens eine Lage aus vorimprägnierten Fasern aus einem durch Ionisation polymerisierbaren Harz umfaßt, wobei zwischen die Haut (4) und die Platte (2) ein Film aus einem durch lonisation polymerisierbaren Klebeharz eingefügt ist,
- und schließlich Ausführen einer Polymerisation durch Ionisation während der Verdichtung der Gesamtheit aus der ersten Haut (3), dem Film und der wabenförmigen Platte (2) oder der Gesamtheit aus der ersten Haut (3), dem Film, der wabenförmigen Platte (2), dem Film und der zweiten Haut (4).

2. Verfahren nach Anspruch 1, **dadurch gekennzeichnet, daß** die vorimprägnierten Fasern aus der Gruppe der Kohlenstoffasern mit hohem Dehnungsmodul, der Glasfasern, der Siliciumoxidfasern, der Siliciumcarbidfasern und der Aramidfasern gewählt sind.

3. Verfahren nach Anspruch 1 oder 2, **dadurch gekennzeichnet, daß** die vorimprägnierten Fasern lange oder kurze Fasern derselben Art oder unterschiedlicher Arten oder Dochte sind und in Form von Lagen aus unidirektionalen Fasern oder in Gewebe- oder Mattenform vorliegen.

4. Verfahren nach einem der Ansprüche 1 bis 3, **dadurch gekennzeichnet, daß** jede Haut (3, 4) aus mehreren übereinanderliegenden Lagen gebildet ist und jede Lage Fasern mit derselben Orientierung aufweist, wobei die Fasern zweier aufeinanderfolgender Lagen unter einem rechten Winkel oder unter jedem anderen Winkel gekreuzt sind.

5. Verfahren nach einem der Ansprüche 1 bis 4, **dadurch gekennzeichnet, daß** das Imprägnierungsharz und das Klebeharz aus der Gruppe der Acrylharze oder der Harze auf Polysilan-Basis, die durch lonisation polymerisierbar sind, gewählt sind.

6. Verfahren nach einem der Ansprüche 1 bis 5, **dadurch gekennzeichnet, daß** die wabenförmige Trägerplatte (2) vom Bienenwabentyp ist.

7. Verfahren nach Anspruch 6, **dadurch gekennzeichnet, daß** die bienenwabenförmige Platte (2) eine Aluminiumwabe aus einem einzigen Teil oder aus mehreren aneinandergefügten Teilen (2a, 2b, 2c) ist.

8. Verfahren nach einem der Ansprüche 1 bis 7, **dadurch gekennzeichnet, daß** die wabenförmige Trägerplatte (2) teilweise oder insgesamt eben oder gemäß irgendeiner Geometrie gekrümmt ist.

9. Verfahren nach einem der Ansprüche 1 bis 8, **dadurch gekennzeichnet, daß** die Form (1) aus einem Werkstoff hergestellt ist, der aus der Gruppe, die Weichstahl, Aluminiumlegierungen, Gips, Holz und Harzbeton umfaßt, gewählt ist.

10. Verfahren nach einem der Ansprüche 1 bis 9, **dadurch gekennzeichnet, daß** die Haut (3) oder die erste Hautlage, die mit der Wand der Form (1) in Kontakt ist, einer Verdichtung unterworfen wird.

11. Verfahren nach einem der Ansprüche 1 bis 10, **dadurch gekennzeichnet, daß** nach der Anordnung sämtlicher Lagen der Haut (3), die mit der Form (1) in Kontakt sind, diese Haut einer Verdichtung unterworfen wird.

12. Verfahren nach einem der Ansprüche 1 bis 11, **dadurch gekennzeichnet, daß** der zweite Klebefilm im voraus an der Fläche der ersten Lage der zweiten Haut (4), die gegen die Trägerplatte (2) gedrückt werden soll, angeordnet wird.

13. Verfahren nach einem der Ansprüche 1 bis 12, **dadurch gekennzeichnet, daß** die Verdichtung durch Anwenden eines Unterdrucks ausgeführt wird.

14. Verfahren nach einem der Ansprüche 1 bis 12 und nach Anspruch 13, **dadurch gekennzeichnet, daß** die Verdichtung der ersten Haut (3) und die Verdichtung der Gesamtheit aus der ersten Haut (3), des ersten Klebefilms und der wabenförmigen Trägerplatte (2) während einer Dauer von etwa zwölf Stunden unter einem Unterdruck ausgeführt werden, der einem Absolutdruck entspricht, der höchstens gleich etwa 0,2 MPa ist.

15. Verfahren nach einem der Ansprüche 1 bis 12 und nach Anspruch 13, das insbesondere auf die Herstellung von Teilen mit wabenförmiger Mittelseele (2), die auf ihren beiden Flächen mit einer Haut (3, 4) versehen ist, angewendet wird, **dadurch gekennzeichnet, daß** die Verdichtung, während der die Polymerisation durch Ionisation erfolgt, unter einem Unterdruck erfolgt, der einem Absolutdruck entspricht, der höchstens gleich etwa 0,4 MPa ist, wobei die Dauer der Verdichtung vor dem Polymerisationsvorgang etwa fünf Stunden beträgt.

16. Verfahren nach einem der Ansprüche 1 bis 15, **dadurch gekennzeichnet, daß** die Bestrahlungsdosis oder die Bombardierungsdosis bei der Polymerisation durch Ionisation in aufeinanderfolgenden Durchgängen mit verringerter Dosis angewendet wird.

## Claims

1. Method of producing parts made from composite material with high dimensional accuracy, formed from an alveolar support panel (2), flanked on one side and/or on the other by a skin (3, 4) fixed by an adhesive resin and comprising at least one layer of mineral or organic fibres and an organic bonding matrix, including:
- placing, by draping on a mould (1) with a shape and dimensions appropriate to the part to be produced, at least one layer of fibres preimpregnated with a resin which can be polymerised by ionisation, in order to produce the or a first skin (3);
- covering said first skin with a film of adhesive resin which can be polymerised by ionisation,
- covering said film with an alveolar panel (2) in one or more parts placed adjacent each other, of appropriate thickness,
- compacting the assembly consisting of first skin (3), film and alveolar panel (2),
- if necessary forming and then compacting a second skin (4) comprising at least one layer of fibres preimpregnated with a resin which can be polymerised by ionisation, a film of adhesive resin which can be polymerised by ionisation being interposed between said skin (4) and said panel (2),
- and, finally, during the compacting of said assembly of first skin (3), film and alveolar panel (2) or said assembly of first skin (3), film, alveolar panel (2), film and second skin (4), carrying out polymerisation by ionisation.

2. A method according to claim 1, **characterised in that** the preimpregnated fibres are chosen from the group of high-modulus carbon, glass, silica, silicon carbide and aramid fibres.

3. A method according to claim 1 or 2, **characterised in that** the preimpregnated fibres are long or short fibres, of the same nature or mixed, or twists, and in the form of a layer of unidirectional fibres or fabric or mat.

4. A method according to one of claims 1 to 3, **characterised in that** each skin (3, 4) consists of several superimposed layers and each layer comprises fibres with the same orientation, the fibres in two consecutive layers being crossed at right-angles or at any other angle.

5. A method according to one of claims 1 to 4, **characterised in that** the impregnation resin and the adhesive resin are chosen from the group of acrylic resins or resins based on polysilane, able to be polymerised by ionisation.

6. A method according to one of Claims 1 to 5, **characterised in that** the alveolar support panel (2) is of the honeycomb type.

7. A method according to Claim 6, **characterised in that** the alveolar support panel (2) is an aluminium honeycomb in a single piece or in several parts adjacent each other (2a, 2b, 2c).

8. A method according to one of claims 1 to 7, **characterised in that** the alveolar support panel (2) is partly or wholly flat or curved according to any geometry.

9. A method according to one of claims 1 to 8, **characterised in that** the mould (1) is produced from a material chosen from the group comprising soft steel, aluminium alloys, plaster, wood or resin concretes.

10. A method according to one of claims 1 to 9, **characterised in that** the skin (3) or first skin layer in contact with the wall of the mould (1) is subjected to compacting.

11. A method according to one of claims 1 to 10, **characterised in that**, after placing all the layers of the skin (3) in contact with the mould (1), said skin is subjected to compacting.

12. A method according to one of claims 1 to 11, **characterised in that** said second adhesive film is previously positioned against the base of the first layer of the second skin (4) intended to be applied against the support panel (2).

13. A method according to one of claims 1 to 12, **characterised in that** the compacting is carried out by the application of a vacuum.

14. A method according to one of claims 1 to 12 and Claim 13, **characterised in that** the compacting of the first skin (3) and the compacting of the assembly consisting of first skin (3), first adhesive film and alveolar support panel (2) are carried out under a vacuum corresponding to an absolute pressure of less than or equal to approximately 0.2 MPa and for a period of approximately twelve hours.

15. A method according to one of claims 1 to 12 and claim 13, particularly applied to the production of parts with an alveolar central core (2) provided with a skin (3, 4) on both faces, **characterised in that** the compacting during which the polymerisation by ionisation takes place is carried out under a vacuum corresponding to an absolute pressure of less than or equal to approximately 0.4 MPa, the duration of compacting before the polymerisation operation being approximately five hours.

16. A method according to one of claims 1 to 15, **characterised in that** the irradiation or bombardment dose during the polymerisation by ionisation is applied by successive passes at a reduced dose.
